# EUROPEAN PATENT SPECIFICATION

(11) **EP 3 021 479 B1**
(45) Date of publication and mention of the grant of the patent: **30.12.2020**
(21) Application number: 15193324.9
(22) Date of filing: 06.11.2015
(51) Int. Cl.: H02P 27/04, H02P 23/03, H02P 21/06

(54) **APPARATUS FOR CONTROLLING INVERTER**
VORRICHTUNG ZUR STEUERUNG EINES UMRICHTERS
APPAREIL DE COMMANDE D'ONDULEUR

(30) Priority: 12.11.2014 KR 20140156848
(43) Date of publication of application: 18.05.2016
(73) Proprietor: LSIS Co., Ltd., Anyang-si, Gyeonggi-do 431-080 (KR)
(72) Inventor: Kim, Junghan, 431-837 GYEONGGI-DO (KR)
(74) Representative: K&L Gates LLP

(56) References cited:
- EP-A2- 2 618 479
- US-A1- 2003 020 432
- US-A1- 2006 215 429
- US-A1- 2014 197 765

## Description

### BACKGROUND

### FIELD OF THE DISCLOSURE

The present disclosure relates to an apparatus for controlling an inverter.

### DISCUSSION OF THE RELATED ART

An inverter is a power converter that converts inputted AC (Alternating Current) electric power to DC (Direct Current) electric power, converts the DC electric power to a voltage having magnitude and frequency required by a motor, and output the voltage to the motor.

The conventional inverter operation control is a method to constantly control gap flux in all frequency areas under the base frequency, that is, to control magnetic flux ingredient current of the stator current. The overall current is increased by the effect of voltage drop due to the stator resistance at low velocity. However, the performance is superior to control with only general voltage/frequency relationships, in a case when a large amount of starting torque is required at an initial stage.

However, there are problems in that the method is largely dependent on motor parameters (stator resistance, stator inductance, no-load current), errors occur in the torque boost compensation voltage due to errors in the relevant parameters, and thereby the operation may fail at a large starting torque, in a case when such controlling method is applied to operation of industrial inverters.

In particular, the control of a certain voltage/frequency is to output a voltage corresponding to the frequency required by a predetermined ratio of voltage and frequency. Therefore, there is still a problem in that the operation may fail when a large starting torque is required at low velocity or when there is a large change in load.

Patent document US 2006/215429 A1 discloses a controller for a power inverter system which generates a voltage command from a command frequency, converts an output current of an inverter to a torque current on synchronous reference frame; and generates a correction voltage to correct the voltage command using the torque current.

Patent document EP 2 618 479 A2 discloses a controller for Interior Permanent Magnet Synchronous Motors (IPMSM) which generates a q-axis reference voltage and a current of synchronous reference frame from a 3-phase current, and a d-axis reference voltage compensating a voltage in response to a load change.

Patent document US 2003/020432 A1 discloses that induction voltage command Em* is obtained from inverter's primary frequency command ω1* and torque boost voltage commander produces torque boost voltage command ΔVz* in accordance with ω1*.

### SUMMARY OF THE DISCLOSURE

One of purposes that the present disclosure intends to achieve is, to provide an inverter controller that enables the inverter to stably operate even when a large starting torque is required for the inverter to be driven, or even when there is a large change in load.

In a general aspect of the present disclosure, a controller for an inverter supplying voltage to a motor is provided according to independent claim 1.

In some exemplary embodiments of the present disclosure, the controller may further comprise: a second conversion unit configured to convert the voltage command to a voltage command on a stationary reference frame; a modulation unit configured to modulate the voltage command on the stationary reference frame according to a motor rating; and a third generation unit configured to generate a PWM (Pulse Width Modulation) signal in order to control a plurality of power switching elements of the inverter, according to the modulated voltage command on the stationary reference frame.

In some exemplary embodiments of the present disclosure, the controller may further comprise: an LPF (Low Pass Filter) configured to control harmonic wave ingredient of the torque current.

In some exemplary embodiments of the present disclosure, the second generation unit may include: a comparison unit configured to compare the torque current with a torque current reference.

In some exemplary embodiments of the present disclosure, the comparison unit may output a value of 1 when the torque current is greater than the torque current reference, and may output a value of 0 when the torque current is not greater than the torque current reference.

In some exemplary embodiments of the present disclosure, the second generation unit may further include: a second multiplication unit configured to multiply an output of the comparison unit and by output of the fourth generation unit.

In some exemplary embodiments of the present disclosure, the second generation unit may further include: a limitation unit configured to limit the compensation voltage below a predetermined voltage.

In some exemplary embodiments of the present disclosure, the motor information may include a slip frequency of the motor and a capacity of the motor.

According to an exemplary embodiment of the present disclosure, there is an advantageous effect of stably driving the inverter, because the compensation voltage is determined according to the status of load even when a large starting torque is required or even when there is a large change in load.

### BRIEF DESCRIPTION OF THE DRAWINGS

FIG. 1 is an exemplary view illustrating a structure of an inverter system according to an exemplary embodiment of the present disclosure.
FIG. 2 is a block diagram illustrating a controller of a conventional inverter system.
FIG. 3 is an exemplary view illustrating a controller of the inverter system of FIG. 1 according to an exemplary embodiment of the present disclosure.
FIG. 4 is a detailed block diagram illustrating a compensation voltage generation unit of FIG. 3 according to an exemplary embodiment of the present disclosure.

### DETAILED DESCRIPTION

Various exemplary embodiments will be described more fully hereinafter with reference to the accompanying drawings, in which some exemplary embodiments are shown.

The terms used in the present disclosure, including ordinal numbers such as "first" or "second", may be used for description of various elements. However, the elements of the present disclosure shall not be limited by such the terms.

An expression used in the singular encompasses the expression of the plural, unless it has clearly different meaning in the context. In the present specification, it is to be understood that the terms such as "including" or "having," etc., are intended to indicate the existence of the features, numbers, operations, actions, components, parts, or combinations thereof disclosed in the specification, and are not intended to preclude the possibility that one or more other features, numbers, operations, actions, components, parts, or combinations thereof may exist or may be added.

Hereinafter, an exemplary embodiment of the present disclosure will be described in detail with reference to the accompanying drawings.

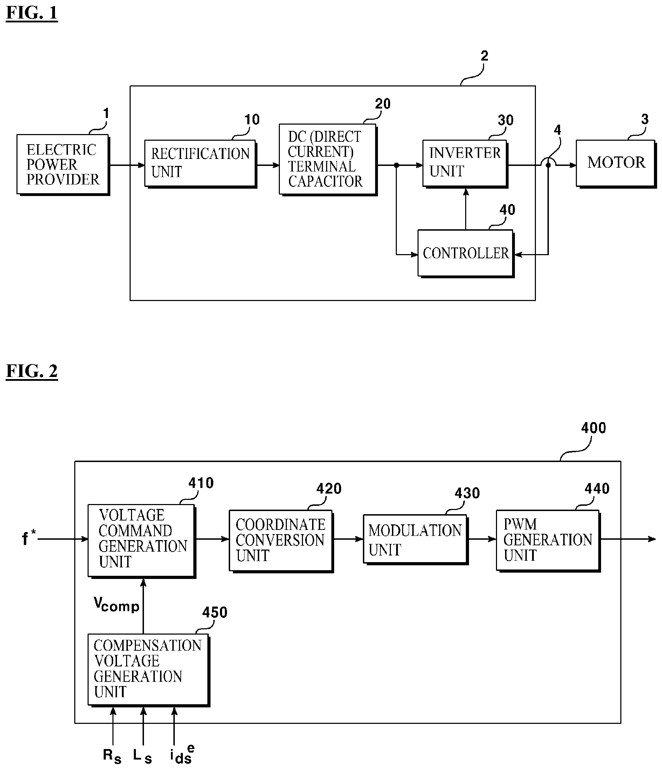

FIG. 1 is an exemplary view illustrating a structure of an inverter system according to an exemplary embodiment of the present disclosure.

As illustrated in FIG. 1, an inverter (2) may receive a three-phase electric power from a three-phase electric power provider (1), convert the three-phase electric power to voltage having predetermined amount and frequency and provide the voltage to a motor (3), and may include a rectification unit (10), a DC (Direct Current) terminal capacitor (20), an inverter unit (30) and a controller (40).

The rectification unit (10) may convert an inputted AC (Alternating Current) voltage to a DC (Direct Current) voltage. The rectification unit (10) may be formed of a plurality of diodes.

The DC terminal voltage increases, when the input electric power supplied from the power supply is greater than the output electric power consumed at the load. In the reverse case, the DC terminal voltage decreases. The DC terminal capacitor (20) may be used in order to resolve the instantaneous electric power imbalance at input/output terminals.

In addition, the inverter unit (30) may include a plurality of power switching elements. On/Off of the plurality of power switching elements may be controlled by a PWM (Pulse Width Modulation) signal of the controller (40), so that the inverter unit (30) may output a voltage having predetermined amount and frequency to the motor (3). Here, the power switching element may be an IGBT (Insulated Gate Bipolar Transistor), but not limited hereto, thus, various power switching elements may be used.

The current detection unit (4) may detect an output of the inverter (2), that is, may detect input current of the motor (3). The current detected by the current detection unit (4) may be used for protective operation of the motor (3). For example, the current detection unit (4) may be a CT (Current Transformer), but not limited hereto. Various devices to perform such functions may be applied as the current detection unit (4).

Hereinafter, the structure of a conventional controller will be described. In addition, the structure of the controller according to an exemplary embodiment of the present disclosure will be described with reference to drawings.

FIG. 2 is a block diagram illustrating a controller of a conventional inverter system.

As illustrated in the figure, the conventional controller (400) to control the inverter may include a voltage command generation unit (410), a coordinate conversion unit (420), a modulation unit (430), a PWM generation unit (440) and a compensation voltage generation unit (450). The controller (400) is a control device for voltage-frequency constant control, which controls the inverter in a case when a rotor location sensor is not configured.

The voltage command generation unit (410) may generate a voltage command from a command frequency. The coordinate conversion unit (420) may coordinate-convert the voltage command received from the voltage command generation unit (410) to a three-phase voltage command on a stationary reference frame.

The modulation unit or AVR (automatic voltage regulator) (430) may control the voltage of the coordinate conversion unit (420) to be compliant with the motor rating. The PWM generation unit (440) may generate a PWM signal for controlling the plurality of power switching elements of the inverter unit (30) according to the voltage command.

Here, the gap flux decreases and thereby the output torque decreases, due to voltage drop by the stator resistance at low velocity, when the voltage-frequency constant control is performed. Increasing the voltage at low velocity in order to compensate the decreased torque is referred to as a torque booster. The compensation voltage generation unit (450) generates a compensation voltage by calculating the amount of torque boost using motor parameters (stator resistance, stator inductance, no-load current) and provides the compensation voltage to the command voltage generation unit (410), so as to compensate the voltage command when a larger amount of starting torque.

However, there are problems in that the compensation voltage generated by the conventional compensation voltage generation unit is largely dependent on motor parameters, errors in compensation voltage occur due to such errors in the relevant parameters, and thereby the operation may fail at a large starting torque.

One purpose of the controller (40) according to an exemplary embodiment of the present disclosure is to resolve such problems. The controller (40) according to an exemplary embodiment of the present disclosure may stably drive the inverter even when a large starting torque is required, or even when there occurs a large change in load.

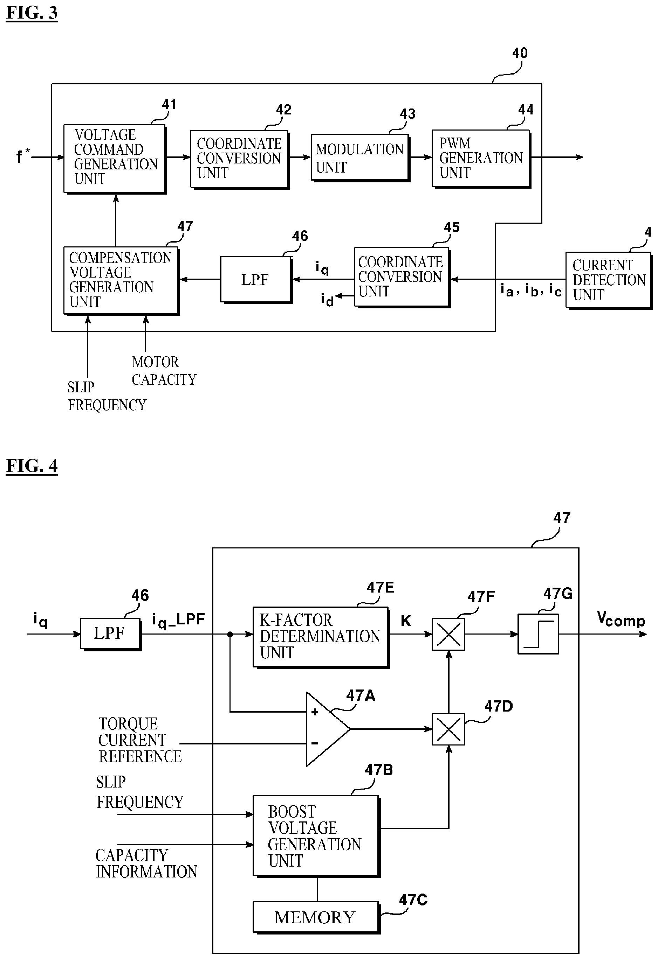

FIG. 3 is an exemplary view illustrating a controller (40) of the inverter system of FIG. 1 according to an exemplary embodiment of the present disclosure.

As illustrated in FIG. 3, the controller (40) of an inverter according to an exemplary embodiment of the present disclosure may include a voltage command generation unit (41), a first coordinate conversion unit (42), a modulation unit (43), a PWM generation unit (44), a second coordinate conversion unit (45), an LPF (Low Pass Filter) (46) and a compensation voltage generation unit (47).

The controller (40) according to an exemplary embodiment of the present disclosure may be used when a rotor location sensor of the motor (3) is not provided, but not limited hereto. The controller (40) according to an exemplary embodiment of the present disclosure may be also used when a rotor location sensor of the motor (3) is provided.

The voltage command generation unit (41) may generate a voltage command from a predetermined command frequency. The coordinate conversion unit (42) may coordinate-convert the voltage command generated by the voltage command generation unit (41) to a three-phase voltage command.

The modulation unit or AVR (43) may modulate the voltage outputted by the coordinate conversion unit (42) to be complaint with the motor rating. In addition, the PWM generation unit (44) may generate a PWM signal for controlling a plurality of power switching elements of the inverter unit (30) according to the modulated voltage command. Descriptions for specific operations of the modulation unit (43) and the PWM generation unit (44) are obvious to those skilled in the art to which the present disclosure pertains, and therefore will be omitted.

The second coordinate conversion unit (45) may receive an output current of the inverter (2) from the current detection unit (4), and may convert the output current to d-axis current and q-axis current on a synchronous reference frame. Here, the d-axis current may be magnetic flux ingredient (magnetic flux current) of the inverter (2) output current, and the q-axis current may be torque ingredient (torque current) of the inverter (2) output current.

The LPF (46) may remove harmonic wave by filtering torque current. Afterwards, the compensation voltage generation unit (47) may receive slip frequency of the motor (3) and the motor (3) capacity information, may generate a compensation voltage based on the received slip frequency, capacity information and a predetermined boost voltage gain, and may provide the compensation voltage to the voltage command generation unit (41).

As an initial overcurrent flows at large amount the compensation when slip frequency increases in the motor (3), the voltage generation unit (47) may accordingly generate a proper compensation voltage. In addition, as the output current may be various by capacity of the motor (3) of a general inverter (2), the voltage generation unit (47) may generate a compensation voltage according to the motor (3) capacity information having a default gain. In addition, in consideration of the voltage gain, greater voltage may be compensated compared to the conventional voltage/frequency constant control. Therefore, an exemplary embodiment of the present disclosure is useful when a great starting torque is required or when using auto adjustment function.

FIG. 4 is a detailed block diagram illustrating a compensation voltage generation unit of FIG. 3 according to an exemplary embodiment of the present disclosure.

As illustrated in FIG. 4, the compensation voltage generation unit (47) according to an exemplary embodiment of the present disclosure may include a comparison unit (47A), a boost voltage generation unit (47B), a memory (47C), first and second multiplication unit (47D, 47F), a K-factor determination unit (47E) and a limitation unit (47G). According to an exemplary embodiment of the present disclosure, an example where the compensation voltage generation unit (47) includes a memory (47C) pre-storing a predetermined voltage gain. However, the present disclosure is not limited hereto. It will be apparent, to those skilled in the art to which the present disclosure pertains, that receiving the voltage gain from an external memory is not excluded in the present disclosure.

The torque current may be outputted from the second coordinate conversion unit (45) of FIG. 3, and harmonic wave ingredient included in the torque current may be filtered by the LPF (46).

The comparison unit (47A) may compare the torque current in which harmonic wave is filtered with the torque current reference for voltage compensation. The torque current reference may be predetermined. Therefore, according to comparison of the comparison unit (47A) the compensation voltage may be generated when the torque current is greater than the torque current reference. That is, the comparison unit (47A) may output a value of 1 when the torque current is greater than the torque current reference, and may output a value of 0 when the torque current is not greater than the torque current reference.

Meanwhile, the slip frequency may be different by every motor (3), and the initial starting current of an induction motor becomes greater as the slip frequency becomes greater. Thus, the boost voltage according to an exemplary embodiment of the present disclosure may be determined based on the slip frequency. In addition, as the rated output current may be different by capacity of the motor (3), the parameters of the motor (3) may become different. Therefore, the gain of boost voltage may also be affected, and the boost voltage may be determined based on capacity information of the motor (3).

In addition, the boost voltage generation unit (47B) may generate the boost voltage also based on voltage gain stored in the memory (47C).

The boost voltage generated by such manners may be multiplied by a value of 1 outputted by the comparison unit (47A) and by the first multiplication unit (47D), and may be provided to the second multiplication unit (47F). In a case when the torque current is smaller than the torque current reference, the comparison unit (47A) outputs a value of 0 (zero). Thus, the compensation voltage may not be outputted.

However, such embodiment is just for the purpose of an example. Other parameters than slip frequency, motor capacity information and voltage gain of the motor may be considered by the boost voltage generation unit (47B) to determine the boost voltage.

The K-factor determination unit (47E) may determine a K-factor from the torque current filtered through the LPF (46), and the second multiplication unit (47F) may generate a compensation voltage by multiplying the K-factor by the boost voltage generated by the boost voltage generation unit (47B). The K-factor may be determined according to the torque current, and the limitation unit (47G) may limit the compensation voltage when the compensation voltage is too high. The limited value may be predetermined.

As described in the above, the compensation voltage generation unit (47) according to an exemplary embodiment of the present disclosure may output a boost voltage based on slip frequency and capacity of the motor (3) and a predetermined voltage gain, only in a case when the torque current of the inverter (2) is above a predetermined reference. The boost voltage outputted in such manner may be determined based on K-factor of the torque current. Thereby, the compensation voltage may be determined according to the state of loads, even in case when a large starting torque is required or there is a wide change in load. Therefore, the inverter may be driven stably.

The abovementioned exemplary embodiments are intended to be illustrative, and not to limit the scope of the claims. Therefore, the technical scope of the rights for the present disclosure shall be decided by the appended claims.

## Claims

1. A controller (40) for an inverter (2) providing voltage to a motor (3), comprising:
a first generation unit (41) configured to generate a voltage command from a command frequency;
a first conversion unit (45) configured to convert an output current of an inverter (2) to a torque current on synchronous reference frame; and
a second generation unit (47) configured to generate a compensation voltage to compensate the voltage command using the torque current;
**characterized in that**
the second generation unit (47) is configured to generate the compensation voltage further using motor information,
wherein the compensation voltage is applied to the first generation unit (41), and the second generation unit (47) includes:
a fourth generation unit (47B) configured to generate a boost voltage according to the motor information and a predetermined voltage gain; and
a first multiplication unit (47F) configured to generate the compensation voltage by multiplying a K-factor of the torque current by the boost voltage.

2. The controller of claim 1, further comprising:
a second conversion unit (42) configured to convert the voltage command to a voltage command on a stationary reference frame;
a modulation unit (43) configured to modulate the voltage command on the stationary reference frame according to a motor (3) rating; and
a third generation unit (44) configured to generate a PWM (Pulse Width Modulation) signal in order to control a plurality of power switching elements of the inverter (2), according to the modulated voltage command on the stationary reference frame.

3. The controller of claim 1 or 2, further comprising:
an LPF (Low Pass Filter) (46) configured to control harmonic wave ingredient of the torque current.

4. The controller of claim 1, wherein the second generation unit (47) includes:
a comparison unit (47A) configured to compare the torque current with a torque current reference.

5. The controller of claim 4, wherein the comparison unit (47A) outputs a value of 1 when the torque current is greater than the torque current reference, and outputs a value of 0 when the torque current is not greater than the torque current reference.

6. The controller of claim 4 or 5, wherein the second generation unit (47) further includes:
a second multiplication unit (47D) configured to multiply an output of the comparison unit (47A) and by output of the fourth generation unit (47B).

7. The controller of any one of claims 1 to 6, wherein the second generation unit (47) further includes:
a limitation unit (47G) configured to limit the compensation voltage below a predetermined voltage.

8. The controller of any one of claims 1 to 7, wherein the motor information includes a slip frequency of the motor (3) and a capacity of the motor (3).

## Patentansprüche

1. Steuerung (40) für einen Wechselrichter (2), der Spannung an einen Motor (3) liefert, umfassend:
eine erste Erzeugungseinheit (41), die konfiguriert ist, um einen Spannungsbefehl aus einer Befehlsfrequenz zu erzeugen;
eine erste Umwandlungseinheit (45), die konfiguriert ist, um einen Ausgangsstrom eines Wechselrichters (2) in einen Drehmomentstrom auf einem synchronen Referenzrahmen umzuwandeln; und
eine zweite Erzeugungseinheit (47), die konfiguriert ist, um eine Kompensationsspannung zu erzeugen, um den Spannungsbefehl unter Verwendung des Drehmomentstroms zu kompensieren;
**dadurch gekennzeichnet, dass**
die zweite Erzeugungseinheit (47) konfiguriert ist, um die Kompensationsspannung ferner unter Verwendung von Motorinformation zu erzeugen,
wobei die Kompensationsspannung an die erste Erzeugungseinheit (41) angelegt wird und die zweite Erzeugungseinheit (47) beinhaltet:
eine vierte Erzeugungseinheit (47B), die konfiguriert ist, um eine Erhöhungsspannung entsprechend der Motorinformation und eine vorgegebene Spannungsverstärkung zu erzeugen; und
eine erste Multiplikationseinheit (47F), die konfiguriert ist, um die Kompensationsspannung durch Multiplizieren eines K-Faktors des Drehmomentstroms mit der Erhöhungsspannung zu erzeugen.

2. Steuerung nach Anspruch 1, ferner umfassend:
eine zweite Umwandlungseinheit (42), die konfiguriert ist, um den Spannungsbefehl in einen Spannungsbefehl auf einem unbeweglichen Referenzrahmen umzuwandeln;
eine Modulationseinheit (43), die konfiguriert ist, um den Spannungsbefehl auf dem unbeweglichen Referenzrahmen gemäß einer Bewertung eines Motors (3) zu modulieren; und
eine dritte Erzeugungseinheit (44), die konfiguriert ist, um ein PWM-Signal (Pulsweitenmodulationssignal) zu erzeugen, um eine Vielzahl von Leistungsschaltelemente des Wechselrichters (2) entsprechend dem modulierten Spannungsbefehl auf dem unbeweglichen Bezugsrahmen zu steuern.

3. Steuerung nach Anspruch 1 oder 2, ferner umfassend:
ein LPF (Tiefpassfilter) (46), das konfiguriert ist, um die Oberwellenkomponente des Drehmomentstroms zu steuern.

4. Steuerung nach Anspruch 1, wobei die zweite Erzeugungseinheit (47) beinhaltet:
eine Vergleichseinheit (47A), die konfiguriert ist, um den Drehmomentstrom mit einer Drehmomentstromreferenz zu vergleichen.

5. Steuerung nach Anspruch 4, wobei die Vergleichseinheit (47A) einen Wert von 1 ausgibt, wenn der Drehmomentstrom größer als die Drehmomentstromreferenz ist, und einen Wert von 0 ausgibt, wenn der Drehmomentstrom nicht größer als die Drehmomentstromreferenz ist.

6. Steuerung nach Anspruch 4 oder 5, wobei die zweite Erzeugungseinheit (47) ferner beinhaltet:
eine zweite Multiplikationseinheit (47D), die konfiguriert ist, um einen Ausgang der Vergleichseinheit (47A) und mit dem Ausgang der vierten Erzeugungseinheit (47B) zu multiplizieren.

7. Steuerung nach einem der Ansprüche 1 bis 6, wobei die zweite Erzeugungseinheit (47) ferner beinhaltet:
eine Begrenzungseinheit (47G), die konfiguriert ist, um die Kompensationsspannung unterhalb einer vorgegebenen Spannung zu begrenzen.

8. Steuerung nach einem der Ansprüche 1 bis 7, wobei die Motorinformation eine Schlupffrequenz des Motors (3) und eine Kapazität des Motors (3) beinhaltet.

## Revendications

1. Dispositif de commande (40) pour un onduleur (2) fournissant une tension à un moteur (3), comprenant :
une première unité de génération (41) configurée pour générer un ordre de tension à partir d'une fréquence d'ordre ;
une première unité de conversion (45) configurée pour convertir un courant de sortie d'un onduleur (2) en un courant de couple sur une trame de référence synchrone ; et
une deuxième unité de génération (47) configurée pour générer une tension de compensation pour compenser l'ordre de tension à l'aide du courant de couple ;
**caractérisé en ce que**
la deuxième unité de génération (47) est configurée pour générer la tension de compensation en utilisant en outre des informations de moteur,
dans lequel la tension de compensation est appliquée à la première unité de génération (41), et la deuxième unité de génération (47) comporte :
une quatrième unité de génération (47B) configurée pour générer une tension d'amplification selon les informations de moteur et un gain de tension prédéterminé ; et
une première unité de multiplication (47F) configurée pour générer la tension de compensation en multipliant un facteur K du courant de couple par la tension d'amplification.

2. Dispositif de commande selon la revendication 1, comprenant en outre :
une deuxième unité de conversion (42) configurée pour convertir l'ordre de tension en un ordre de tension sur une trame de référence fixe ;
une unité de modulation (43) configurée pour moduler l'ordre de tension sur la trame de référence fixe selon une puissance de moteur (3) ; et
une troisième unité de génération (44) configurée pour générer un signal PWM (modulation de largeur d'impulsion) afin de commander une pluralité d'éléments de commutation d'alimentation de l'onduleur (2), selon l'ordre de tension modulée sur la trame de référence fixe.

3. Dispositif de commande selon la revendication 1 ou 2, comprenant en outre :
un LPF (filtre passe-bas) (46) configuré pour commander une composante d'onde harmonique du courant de couple.

4. Dispositif de commande selon la revendication 1, dans lequel la deuxième unité de génération (47) comporte :
une unité de comparaison (47A) configurée pour comparer le courant de couple à une référence de courant de couple.

5. Dispositif de commande selon la revendication 4, dans lequel l'unité de comparaison (47A) fournit en sortie une valeur de 1 lorsque le courant de couple est supérieur à la référence de courant de couple, et fournit en sortie une valeur de 0 lorsque le courant de couple n'est pas supérieur à la référence du courant de couple.

6. Dispositif de commande selon la revendication 4 ou 5, dans lequel la deuxième unité de génération (47) comporte en outre :
une deuxième unité de multiplication (47D) configurée pour multiplier une sortie de l'unité de comparaison (47A) par une sortie de la quatrième unité de génération (47B).

7. Dispositif de commande selon l'une quelconque des revendications 1 à 6, dans lequel la deuxième unité de génération (47) comporte en outre :
une unité de limitation (47G) configurée pour limiter la tension de compensation en dessous d'une tension prédéterminée.

8. Dispositif de commande selon l'une quelconque des revendications 1 à 7, dans lequel les informations de moteur comportent une fréquence de glissement du moteur (3) et une capacité du moteur (3).
